Europäisches Patentamt

European Patent Office

Office européen des brevets

(19)

(11) **EP 0 824 827 B1**

(12) **EUROPÄISCHE PATENTSCHRIFT**

(45) Veröffentlichungstag und Bekanntmachung des Hinweises auf die Patenterteilung:
**28.10.1998 Patentblatt 1998/44**

(21) Anmeldenummer: **96911917.1**

(22) Anmeldetag: **25.04.1996**

(51) Int Cl.⁶: **H04N 7/18**

(86) Internationale Anmeldenummer:
**PCT/DE96/00717**

(87) Internationale Veröffentlichungsnummer:
**WO 96/36180 (14.11.1996 Gazette 1996/50)**

(54) **VERFAHREN ZUR ERSTELLUNG EINER OBJEKTMASKE FÜR VIDEOÜBERWACHUNGSANLAGEN**

PROCESS FOR PREPARING AN OBJECT MASK FOR VIDEO MONITORING SYSTEMS

PROCEDE DE PRODUCTION D'UN MASQUE OBJET POUR DES INSTALLATIONS DE SURVEILLANCE VIDEO

(84) Benannte Vertragsstaaten:
**CH DE FR GB LI**

(30) Priorität: **10.05.1995 DE 19517028**

(43) Veröffentlichungstag der Anmeldung:
**25.02.1998 Patentblatt 1998/09**

(73) Patentinhaber: **ROBERT BOSCH GMBH
70442 Stuttgart (DE)**

(72) Erfinder:
• **PÖCHMÜLLER, Werner
D-31139 Hildesheim (DE)**
• **MESTER, Rudolf
D-30989 Gehrden (DE)**
• **HÖTTER, Michael
D-30989 Gehrden (DE)**

(56) Entgegenhaltungen:
**WO-A-93/23823**

• **COMPUTERS IN INDUSTRY, Bd. 20, Nr. 3, 1.Oktober 1992, AMSTERDAM, NL, Seiten 295-310, XP000305595 BORAIE M T ET AL: "POINTS OF CORRESPONDENCE IN STEREO IMAGES WITH NO SPECIFIC GEOMETRICAL CONSTRAINTS USING MATHEMATICAL MORPHOLOGY"**

## Beschreibung

Stand der Technik

Die Erfassung und Verfolgung von Objekten in Videobildsequenzen setzt eine möglichst exakte und schnelle Segmentierung der zu beobachtenden Objekte von ihrem Hintergrund und umgebenden Objekten voraus. In der Regel geschieht dies durch Differenzdetektionsverfahren, die Änderungen zwischen einem gegenwärtigen und einem zeitlich vorangegangenen Bild oder Änderungen zwischen einem Szenenbild und einem Hintergrundbild detektieren. Diese einfachen Segmentierungsverfahren können jedoch nicht zwischen dem Objekt und von diesem Objekt in seiner unmittelbaren Umgebung hervorgerufenen Helligkeitsänderungen durch Schattenwurf, Reflektion, künstliche Beleuchtung etc. unterscheiden. Im Falle eines Fahrzeugs bedeutet dies, daß nicht nur das Fahrzeug selbst sondern auch Teile seiner Umgebung segmentiert werden, deren Helligkeit z.B. durch Schattenwurf oder Scheinwerfer des Fahrzeugs zeitlich kurzfristig verändert werden. In allen Fällen in denen eine möglichst exakte Lokalisierung des Fahrzeugs notwendig ist, muß daher eine aufwendige Nachbearbeitung erfolgen, die diese Umgebungsteile erkennt und vom Fahrzeug segmentiert. Eine derartige Vorgehensweise ist für Anwendungsfälle z.B. auch für Alarmanlagen mit Videoüberwachungskameras an Gebäuden unakzeptabel. Fehlauslösungen der Alarmanlage können durch Schattenwürfe und Lichtwechsel z.B. bei vorbeiziehenden Wolken entstehen, wenn keine automatische Nachbearbeitung des Videobildes erfolgt.

In der Literatur ist bereits eine 8-Parameter-Methode zur Erkennung von Objekten auf Ebenen publiziert (s. hierzu Faugeras, O., Three-Dimensional Computer Vision, The MIT Press, Cambridge, 1993, Seiten 271 bis 275), die die genannten Nachteile nicht aufweist. Diese Methode besitzt jedoch den Nachteil, daß durch Kopplung der Transformationsgleichungen

$$x_2 = \frac{a_0 x_1 + a_1 y_1 + a_2}{a_6 x_1 + a_7 y_1 + 1} \qquad (1)$$

und

$$y_2 = \frac{a_3 x_1 + a_4 y_1 + a_5}{a_6 x_1 + a_7 y_1 + 1} \qquad (2)$$

über die Parameter $a_6$ und $a_7$ nicht eine optimale Kompensation von Schatteneffekten in realen Szenen erreichbar ist.

Aus der Veröffentlichung 'Points of correspondence in stereo images with no specific geometrical constraints using mathematical morphology', Computers in Industry, Band 20 Nr. 3, Oktober 1992, Seiten 295 bis 310, ist ein Verfahren zur Kalibrierung eines Stereo-Kamerasystems und zur Berechnung von dreidimensionalen Parametern bekannt. Das Verfahren basiert auf Korrespondenzpunktmessungen, mit denen dreidimensionale Parameter der Korrespondenzpunkte berechnet werden. Hierzu ist eine Szenenkalibrierung in drei Raumebenen nötig. Durchgeführt wird diese, in dem ein Roboterarm eine Ebene mit Kalibriermarkierungen in drei Positionen fährt. Dadurch wird eine unbeschränkte Berechnung dreidimensionaler Punktparameter innerhalb des kalibrierten Raumes möglich. Dieses Verfahren ist relativ aufwendig und nicht geeignet, lediglich die Rekonstruktion einer Abbildung von der Bildebene einer Stereokammer in die Bildebene einer zweiter Stereokammer mit einer stark vereinfachten Kalibrierung zu projizieren.

Ziele und Vorteile der Erfindung

Die vorgestellte Methode erlaubt eine einfache Segmentierung von Fahrzeugen auf einer ebenen Fahrbahn von durch diffuser Lichtstreuung erzeugten Beleuchtungseffekten, ohne aufwendige Verarbeitung mit komplexen Algorithmen. Der Vorteil gegenüber bereits publizierten 8-Parameter-Methoden ist die einfache, schnelle und robuste Berechnung der 10 Parameter bei exakterer Abbildung durch eine Entkopplung der Tranformationen für die x- und die y-Achse.

Beschreibung der Zeichnungen

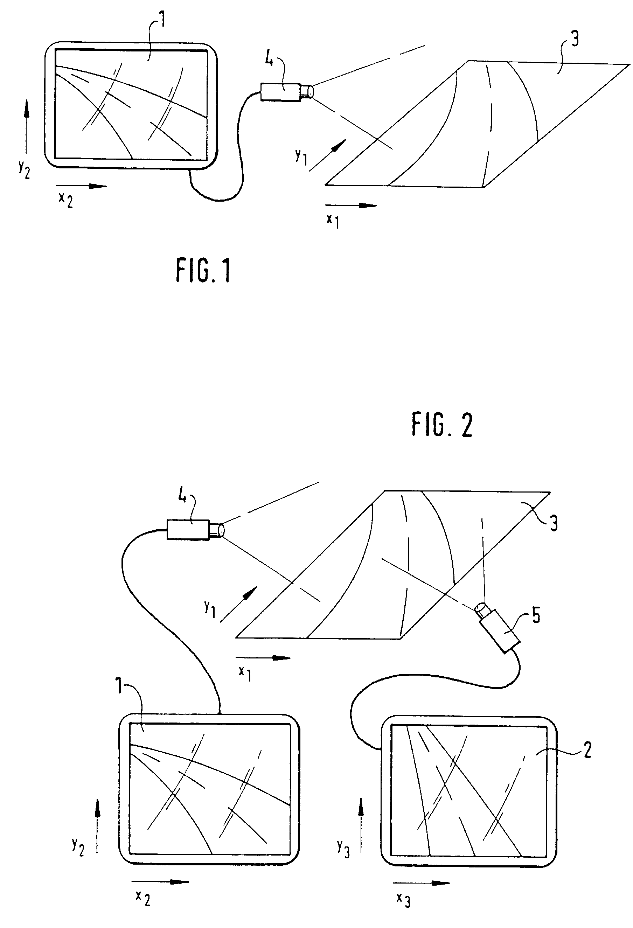

1. Abbildung 1 zeigt die Aufnahme einer Ebene (Ziffer 3) in einer dreidimensionalen Szene durch eine Videokamera (Ziffer 4). Das empfangene Bild wird auf einem zweidimensionalen Bildschirm (Ziffer 1) dargestellt (Stand der Technik).

2. Abbildung 2 stellt eine Erweiterung des Aufnahmesystems in Abbildung 1 dar. Durch eine zweite Kamera (Ziffer 5), die zu denselben Zeitpunkten wie die erste Kamera aber von einem anderen Standpunkt aus Bilder derselben Szene auf einen zweiten Bildschirm (Ziffer 2) liefert, erhält man ein Stereosystem (Stand der Technik).

3. Abbildung 3 zeigt Korrespondenzpunkte (Ziffer 7) der betrachteten Ebene, d.h. Punkte der Ebene, die in beiden Bildschirmen gleichzeitig zu sehen sind und die sich räumlich exakt bestimmen und zuordnen lassen.

4. Abbildung 4 zeigt die Aufnahme eines Fahrzeugs (Ziffer 10) in der betrachteten Szene.

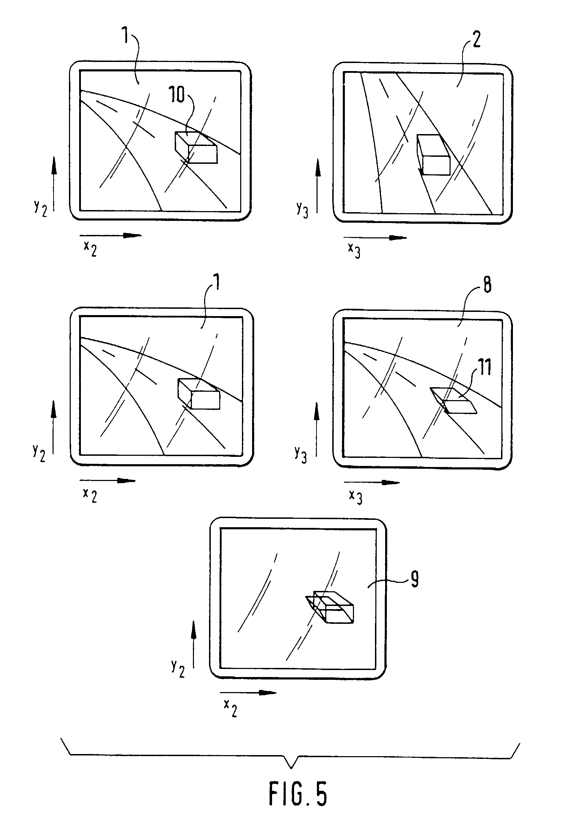

5. Abbildung 5 skizziert die Vorgehensweise zur Objektmaskenerstellung. Ein Fahrzeug (Ziffer 10) ist auf dem ersten (Ziffer 1) und zweiten (Ziffer 2) Bildschirm aus verschiedenen Blickwinkeln zu sehen. Nach Erstellung der 10-Parameter-Abbildung wird das rechte Bild in das Koordinatensystem des linken Bildes transformiert (Ziffer 8). Alle Punkte der Ebene befinden dann auf derselben Position wie die korrespondierenden Punkte im ersten Kamerabild. Das Fahrzeug wird jedoch verzerrt abgebildet (Ziffer 11). Nun subtrahiert man dieses verzerrte Bild der zweiten Kamera vom Bild der ersten Kamera und erhält damit ein Resultat, daß ungefähr so aussieht, wie in Ziffer 9 dargestellt.

Beschreibung der Erfindung

Die Abbildung einer Ebene in einer dreidimensionalen Szenerie auf den zweidimensionalen Bildschirm läßt sich mit einer 8-Parameter-Transformation durchführen (siehe z.B. Hoetter, M., Thoma, R., "Image Segmentation Based on Object Oriented Mapping Parameter Estimation", *Signal Processing,* Vol. 15, No. 3, pp. 315-334, October 1988). Bild 1 skizziert diesen Sachverhalt. Dabei sind $x_1$ und $y_1$ die Koordinaten eines Punktes in der Ebene der dreidimensionalen Szenerie, während $x_2$, $y_2$ die Koordinaten des entsprechenden Punktes im Videobild darstellen. Die Abbildung ist umkehrbar und führt dabei wieder zu einer 8-Parameter-Abbildung nach Gleichungen 1 und 2 (mit anderen Koeffizienten $a_0 \ldots a_7$).

Bild 2 zeigt eine Erweiterung dieses Falles. Bei einer Stereoaufnahme beobachten zwei Kameras zum selben Zeitpunkt eine gemeinsame Szenerie. Hier lassen sich zwei 8-Parameter-Abbildungen von der Ebene $x_1$, $y_1$ in der dreidimensionalen Szene in die Bildschirmkoordinaten $x_2$, $y_2$ bzw. $x_3$, $y_3$ bilden. Hoetter *et al.* zeigen in "Image Segmentation Based on Object Oriented Mapping Parameter Estimation", *Signal Processing,* Vol. 15, No. 3, pp. 315-334, October 1988, daß zwei aufeinanderfolgende Abbildungen dieser Art wieder durch eine 8-Parameter-Abbildung beschrieben werden können. Dies bedeutet aber, daß auch eine direkte Abbildung eines Punktes $x_3$, $y_3$ im rechten Videobild in einen Punkt $x_2$, $y_2$ im linken Videobild nach

$$x_2 = \frac{b_0 x_3 + b_1 y_3 + b_2}{b_6 x_3 + b_7 y_3 + 1} \tag{3}$$

und

$$y_2 = \frac{b_3 x_3 + b_4 y_3 + b_5}{b_6 x_3 + b_7 y_3 + 1} \tag{4}$$

möglich ist. Diese Abbildung ist nur für all die Punkte korrekt, die auf einer Ebene in der dreidimensionalen Szene liegen. Diese Tatsache läßt sich für die Objektdetektion unter Berücksichtigung von Schatten und Effekten diffuser Lichtstreuung nutzen. Dabei geht man so vor, daß die 8-Parameter-Transformation vom rechten Kamerabild in das linke Kamerabild aufgestellt wird. Dann transformiert man das rechte Kamerabild mit Hilfe dieser Abbildung in das Koordinatensystem $x_2$, $y_2$ des linken Bildes (siehe Abbildung 5, Ziffer 8). Durch einfachen Vergleich des linken Bildes mit dem transformierten rechten Bild lassen sich Objekte segmentieren, die nicht auf der Ebene liegen, da für diese die berechnete Transformation falsch ist (siehe Ziffer 9).

Eine Verbesserung der Schattenkompensation läßt sich erreichen, indem man die beiden Abbildungen für die $x$- und $y$-Koordinate entkoppelt. Durch die Entkopplung ist eine genauere Abbildung möglich. Resultat ist eine 10-Parameter-Abbildung

$$x_2 = \frac{b_0 x_3 + b_1 y_3 + b_2}{b_6 x_3 + b_7 y_3 + 1} \tag{5}$$

$$y_2 = \frac{b_3 x_3 + b_4 y_3 + b_5}{b_8 x_3 + b_9 y_3 + 1} \tag{6}$$

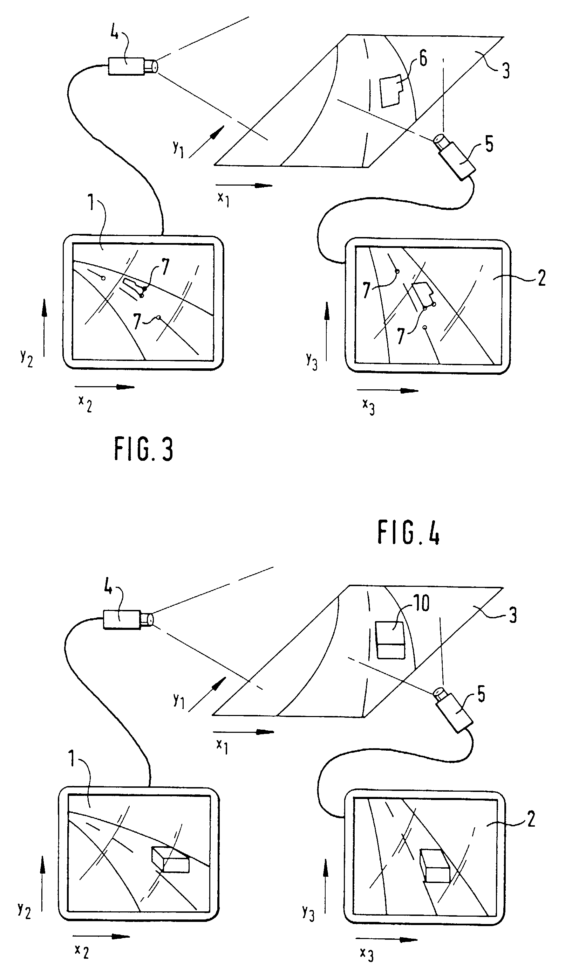

Die Bestimmung der Parameter $b_0, b_1, \cdots, b_9$ erfolgt über eine lineare Regression aus $m$ Ebenenkorrespondenzpunktkoordinaten (siehe Abbildung 3, wobei $m \geq 5$ Sei $\vec{b}_x = (b_0, b_1, b_2, b_3, b_4)^T$ und $\vec{b}_y = (b_5, b_6, b_7, b_8, b_9)^T$ dann bedeutet dies die Lösung der beiden Gleichungen

$$K_x K_x^T \vec{b}_x = K_x \vec{x}_3 \tag{7}$$

und

$$K_y K_y^T \vec{b}_y = K_y \vec{y}_3, \tag{8}$$

mit

$$K_x K_x^T = \sum_{i=1}^{m} \begin{pmatrix} x_{2i}^2 & x_{2i}y_{2i} & x_{2i} & -x_{2i}^2 x_{3i} & -x_{2i}x_{3i}y_{2i} \\ x_{2i}y_{2i} & y_{2i}^2 & y_{2i} & -x_{2i}x_{3i}y_{2i} & -x_{3i}y_{2i}^2 \\ x_{2i} & y_{2i} & 1 & -x_{2i}x_{3i} & -x_{3i}y_{2i} \\ -x_{2i}^2 x_{3i} & -x_{2i}x_{3i}y_{2i} & -x_{2i}x_{3i} & x_{2i}^2 x_{3i}^2 & x_{2i}x_{3i}^2 y_{2i} \\ -x_{2i}x_{3i}y_{2i} & -x_{3i}y_{2i}^2 & -x_{3i}y_{2i} & x_{2i}x_{3i}^2 y_{2i} & x_{3i}^2 y_{2i}^2 \end{pmatrix} \tag{9}$$

und

$$K_y K_y^T = \sum_{i=1}^{m} \begin{pmatrix} x_{2i}^2 & x_{2i}y_{2i} & x_{2i} & -x_{2i}^2 y_{3i} & -x_{2i}y_{2i}y_{3i} \\ x_{2i}y_{2i} & y_{2i}^2 & y_{2i} & -x_{2i}y_{2i}y_{3i} & -y_{2i}^2 y_{3i} \\ x_{2i} & y_{2i} & 1 & -x_{2i}y_{3i} & -y_{2i}y_{3i} \\ -x_{2i}^2 y_{3i} & -x_{2i}y_{2i}y_{3i} & -x_{2i}y_{3i} & x_{2i}^2 y_{3i}^2 & x_{2i}y_{2i}y_{3i}^2 \\ -x_{2i}y_{2i}y_{3i} & -y_{2i}^2 y_{3i} & -y_{2i}y_{3i} & x_{2i}y_{2i}y_{3i}^2 & y_{2i}^2 y_{3i}^2 \end{pmatrix} . \tag{10}$$

Dabei stellt z.B. $x_{2i}$ die $x$-Koordinate des $i$-ten Meßpunktes aus dem linken Bild (Ziffer 1 in Abbildungen) und $y_{3i}$ die $y$-Koordinate des $i$.ten Meßpunktes aus dem rechten Bild (Ziffer 2 in Abbildungen) dar. Die Vektoren $\vec{x}_3 = (x_{31}, x_{32}, \cdots, x_{3m})^T$, $\vec{y}_3 = (y_{31}, y_{32}, \cdots, y_{3m})^T$ setzen sich aus den Meßwerten der Korrespondenzpunkte in einem Bildschirm zusammen. Die Lösung dieser Gleichungssysteme liefert die Parameter $b_0, b_1, \cdots, b_9$.

**Zusammenfassende Vorgehensweise zur Erzeugung einer Objektmaske**

1. Bestimme mindestens 10 korrespondierende Punkte auf der in beiden Videobildern beobachteten Ebene. Abbildung 3 zeigt einige Punkte, die sich hierfür eignen (Ziffer 7, z.B. Ecken an Fahrbahnmarkierungen und Teerflekken (Ziffer 6)).

2. Berechne aus den Korrespondenzpunkten die Parameter $b_0, b_1, \cdots b_9$, der 10-Parameter-Abbildung der betrachteten Ebene vom rechten Videobild in das Koordinatensystem des linken Videobilds nach Gleichungen 7 und 8.

3. Projiziere das rechte Videobild mit Hilfe der 10-Parameter-Abbildung in das Koordinatensystem des linken Videobilds. Abbildung 5 zeigt diese Projektion in Ziffer 8. Alle Punkte der Ebene (Straße) werden korrekt abgebildet und sehen so aus, wie im linken Bild. Alle Punkte, die von der Ebene abweichen, wie z.B. das Fahrzeug (Ziffer 11), werden verzerrt abgebildet, da die 10-Parameter-Abbildung nur für Punkte der Ebene gültig ist.

4. Vergleiche das linke Videobild mit dem projizierten rechten Videobild. Unterschiede deuten auf Objektpunkte hin, die nicht in der Fahrbahnebene liegen. In Abbildung 5, Ziffer 9 wurden das projizierte rechte Bild (Ziffer 8) von dem linken Bild (Ziffer 1) subtrahiert. Alle Punkte der Ebene verschwinden, da sie in beiden Bildern denselben Grauwert an derselben Stelle besitzen; während Punkte außerhalb der Ebene nicht verschwinden (soweit diese Objekte eine strukturierte Oberfläche besitzen).

**Patentansprüche**

1. Verfahren zur Erstellung einer Objektmaske für Videoüberwachungsanlagen , anhand derer räumliche Objekte von einem Hintergrundbild deutlich unterscheidbar sind, wobei das zu überwachende Gebiet von zwei räumlich getrennt angeordneten Videokameras aufgenommen wird, so daß eine Stereoaufnahme entsteht, dadurch gekennzeichnet, daß mindestens zehn korrespondierende Punkte auf der in beiden Videobildern beobachteten Ebene bestimmt werden, daß in einem weiteren Schritt aus $\underline{m}$ Korrespondenzpunkten mit m >= 5 die Parameter $b_0$, $b_1$... $b_9$ der 10-Parameter-Abbildung der betrachteten Ebene des einen Videobildes in das Koordinatensystem des anderen Videobildes projiziert wird, wobei die 10-Parameter-Abbildung nach den folgenden Formeln bestimmt wird,

$$x_2 = \frac{b_0 x_3 + b_1 y_3 + b_2}{b_6 x_3 + b_7 y_3 + 1}$$

$$y_2 = \frac{b_3 x_3 + b_4 y_3 + b_5}{b_8 x_3 + b_9 y_3 + 1}$$

wobei $x_2$, $y_2$ die Koordinaten eines projizierten Punktes, $x_3$, $y_3$ die Koordinaten des unprojizierten Punktes sind und daß das projizierte Videobild mit dem korrespondierenden anderen Videobild durch Subtraktion verglichen wird.

2. Verfahren nach Anspruch 1, dadurch gekennzeichnet, daß der Vergleich des projizierten Videobildes mit dem korrespondierenden anderen Videobild jeweils durch Subtraktion des Graubildwertes eines Punktes des projizierten Videobildes von dem Graubildwert des Punktes mit den gleichen Koordinaten in dem anderen Videobild geschieht.

**Claims**

1. Method for producing an object mask for video monitoring systems, using which three-dimensional objects can be clearly distinguished from a background image, the region to be monitored being shot by two video cameras which are arranged spatially separated, so that a stereo shot is produced, characterized in that at least ten corresponding points are determined on the plane observed in both video images, in that, in a further step, from $\underline{m}$ correspondence points where m ≥ 5, the parameters $b_0$, $b_1$... $b_9$ of the 10-parameter image of the viewed plane of the one video image are projected into the coordinate system of the other video image, the 10-parameter image being defined using the following formulae:

$$x_2 = \frac{b_0 x_3 + b_1 y_3 + b_2}{b_6 x_3 + b_7 y_3 + 1}$$

$$y_2 = \frac{b_3 x_3 + b_4 y_3 + b_5}{b_8 x_3 + b_9 y_3 + 1}$$

where $x_2$, $y_2$ are the coordinates of a projected point, $x_3$, $y_3$ are the coordinates of the unprojected point, and in that the projected video image is compared with the corresponding other video image by subtraction.

2. Method according to Claim 1, characterized in that the comparison of the projected video image with the corresponding other video image is in each case carried out by subtraction of the grey-image level of a point in the projected video image from the grey-image level of the point at the same coordinates in the other video image.

## Revendications

1. Procédé pour former un masque objet pour des installations de surveillance vidéo permettant de distinguer de manière significative des objets dans l'espace par rapport au fond,
selon lequel on effectue une prise de vue de la zone à surveiller avec deux caméras vidéo distinctes dans l'espace donnant une prise de vue stéréophonique,
caractérisé en ce que
on définit au moins dix points de correspondance sur le plan observé par les deux images vidéo,

- dans une autre étape, à partir de (m) points de correspondance (m >= 5) on projette les paramètres $b_0$, $b_1$, ... $b_9$ de l'image à 10 paramètres du plan observé d'une image vidéo dans le système de coordonnées de l'autre image vidéo,
- l'image à 10 paramètres étant définie par les formules suivantes :

$$x_2 = \frac{b_0 x_3 + b_1 y_3 + b_2}{b_6 x_3 + b_7 y_3 + 1}$$

$$y_2 = \frac{b_3 x_3 + b_4 y_3 + b_5}{b_8 x_3 + b_9 y_3 + 1}$$

$x_2$, $y_2$ représentent les coordonnées d'un point projeté, $x_3$, $y_3$ représentent les coordonnées d'un point non projeté et,

l'image vidéo projetée est comparée par soustraction à l'autre image vidéo correspondante.

2. Procédé selon la revendication 1,
caractérisé en ce que
la comparaison de l'image vidéo projetée avec l'autre image vidéo correspondante se fait chaque fois par soustraction de la valeur de l'image de gris d'un point de l'image vidéo projetée par rapport à la valeur de gris du point de mêmes coordonnées de l'autre image vidéo.

FIG.1

FIG. 2

FIG. 3

FIG. 4

FIG.5